**Europäisches Patentamt**

**European Patent Office**

**Office européen des brevets**

(19)

(11) Veröffentlichungsnummer : **0 440 951 B1**

(12)

# EUROPÄISCHE PATENTSCHRIFT

(45) Veröffentlichungstag der Patentschrift :
**11.11.92 Patentblatt 92/46**

(51) Int. Cl.$^5$ : **B60K 20/02, F16H 59/02**

(21) Anmeldenummer : **90124529.0**

(22) Anmeldetag : **18.12.90**

(54) **Vorrichtung zur Verbindung eines Handhebels mit einem Stellgestänge zum Wählen von Gängen eines Gangwechselgetriebes.**

(30) Priorität : **09.02.90 DE 4003899**

(43) Veröffentlichungstag der Anmeldung :
**14.08.91 Patentblatt 91/33**

(45) Bekanntmachung des Hinweises auf die
Patenterteilung :
**11.11.92 Patentblatt 92/46**

(84) Benannte Vertragsstaaten :
**FR GB IT SE**

(56) Entgegenhaltungen :
**DE-A- 3 307 950**

(56) Entgegenhaltungen :
**DE-A- 3 829 559**
**FR-A- 2 589 798**
**US-A- 3 591 192**
**US-A- 3 657 943**
**US-A- 4 565 107**
**US-A- 4 862 760**

(73) Patentinhaber : **MERCEDES-BENZ**
**AKTIENGESELLSCHAFT**
**Postfach 60 02 02**
**W-7000 Stuttgart 60 (DE)**

(72) Erfinder : **Gellner, Harald**
**Triebstrasse 17**
**W-7142 Marbach 3 (DE)**

EP 0 440 951 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf eine Vorrichtung nach dem Oberbegriff von Patentanspruch 1.

Bei einer bekannten Vorrichtung dieser Art (DE-PS 33 07 950) ist das Stellgestänge zusätzlich noch zum Schalten der Gänge von Hand verwendet, so daß die Gleitführung für das untere Ende des Hebelteiles bewegungsfest zu der mit dem Stellgestänge verbundenen Gelenkhälfte und das Aufnahmeteil bewegungsfest zu einem Getriebegehäuseteil angeordnet sind. Sowohl die Lagerung des Hebelteiles im Aufnahmeteil als auch das Gelenk zwischen Stellgestänge und Aufnahmeteil sind als Kugelgelenk ausgebildet. Die als Auflager arbeitende und zu Dämpfungszwecken auf der Auflagerfeder abgestützte ringförmige Kugelpfanne ist sowohl unmittelbar am Sicherungsring zum Abfangen der Federkraft abgestützt als auch von zwei Positionierzapfen bewegungsfest durchsetzt, welche mit ihren zur Lagerachse radial inneren Zapfenenden in einen zur Lagerachse parallelen Führungsschlitz der hebelfesten Gelenkkugel und mit ihren radial äußeren Zapfenenden in einen entsprechenden Führungsschlitz des Aufnahmeteiles jeweils eingreifen. Die als Niederhalter arbeitende ringförmige Kugelpfanne ist als elastisches Kunststoffteil in einen korrespondierenden zylindrischen Abschnitt der unteren Kugelpfanne eingepreßt und mittels eines weiteren Sicherungsringes gegenüber der letzteren fixiert. Bei dieser Anordnung ist weder das Aufnahmeteil mit den Kugelpfannen für das nachträgliche Einsetzen des Handhebels als vormontierbare Baueinheit ausführbar noch eine Montage bzw. Demontage des Handhebels bei Abdeckung des Aufnahmeteiles mittels einer Kulissenführung möglich, zumal dann die mit der Schaltwelle verbundene Gleitführung für die Aufnahme der unteren Gelenkkugel des Handhebels auch nicht ohne weiteres in fluchtende Stellung zur Achse des Aufnahmeteiles bringbar ist.

Die der Erfindung zugrunde liegende Aufgabe besteht im wesentlichen darin, eine Vorrichtung zur lösbaren Verbindung eines Handhebels über ein Gelenk mit einem Stellgestänge zum Wählen von Gängen einer selbsttätigen Schaltvorrichtung eines Gangwechselgetriebes zu schaffen, bei welcher der Handhebel zuletzt, also nach Einbau des Stellgestänges und der üblichen Wählkulisse in das Fahrzeug, ohne größere Schwierigkeiten in seine in Bezug auf die Lage des Handgriffes vorbestimmte Einbaulage bringbar ist.

Ausgehend von einer Vorrichtung mit den Merkmalen im Oberbegriff von Patentanspruch 1 ist die erläuterte Aufgabe in vorteilhafter Weise durch die Ausgestaltung nach Patentanspruch 1 gelöst.

Bei der Vorrichtung nach der Erfindung ist das Aufnahmeteil zusammen mit der Auflagerfeder, den beiden Lagerringen und zusammen mit dem einzigen noch erforderlichen Sicherungsring als vormontierbare Baueinheit ausführbar, in welche der Handhebel nach erfolgter Montage der üblichen Wählkulisse, durch letztere hindurch, einsetzbar und ohne weiteres in der vorbestimmten Einbaulage fixierbar ist.

Einzelheiten der Erfindung ergeben sich aus der nachstehenden Beschreibung von zwei in der Zeichnung schematisch dargestellten Ausführungsbeispielen. In der Zeichnung bedeuten:

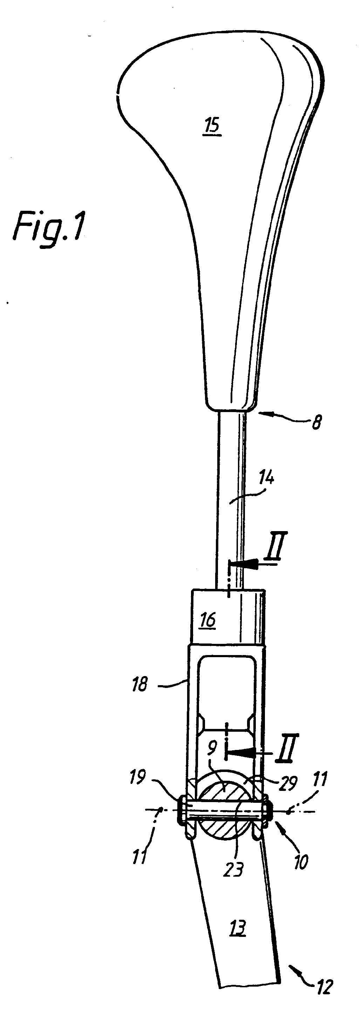

Fig. 1: eine Vorrichtung nach der Erfindung in einer Prinzipdarstellung,

Fig. 2: einen Schnitt durch die Vorrichtung nach der Erfindung von Fig. 1 nach Linie II-II,

Fig. 3: einen Schnitt durch die Vorrichtung nach der Erfindung von Fig. 1 nach Linie III-III,

Fig. 4: einen Schnitt durch die Vorrichtung nach der Erfindung von Fig. 1 nach Linie IV-IV in Fig. 3,

Fig. 5: eine Variante eines Lagerringes der Vorrichtung nach der Erfindung von Fig. 1 in einer der Fig. 2 entsprechenden Schnittdarstellung nach Linie V-V von Fig. 6 und

Fig. 6: den Lagerring von Fig. 5 in Ansicht gemäß Pfeilrichtung VI, also in der vom Widerlager 28 zum Stirnende 58 weisenden Richtung.

Ein nach Art einer Mittelschaltung neben dem Fahrersitz eines Kraftfahrzeuges angeordneter Handhebel 8 einer Wählvorrichtung einer selbsttätigen Schaltvorrichtung eines Gangwechselgetriebes ist an seinem oberen Ende mit dem üblichen Handgriff 15 versehen, in seinem mittleren Bereich durch eine übliche Wählkulisse 17 geführt sowie an seinem unteren Ende mit einem zu ihm festen Hebelteil 14 versehen, welches in einem zylindrischen Aufnahmeteil 16 eines die eine Gelenkhälfte eines einachsigen Gelenkes 10 bildenden Gabelkopfes 18 lösbar befestigt ist. Die andere Gelenkhälfte wird durch einen Gelenkbolzen 19 gebildet, welcher in einer Querbohrung 23 einer Stellwelle 9 gehaltert und im übrigen mit der Stellwelle 9 drehfest und lösbar verbunden ist.

Der Gabelkopf 18 und somit auch der Handhebel 8 sind am Gelenkbolzen 19 schwenkbar angelenkt, welcher mit seiner Achse - der Gelenkachse 11-11 - quer zur Drehachse 7-7 der Stellwelle 9 liegt. Auf diese Weise vermag der Handhebel 8 dem wechselnden Verlauf der in den Richtungen der Drehachse 7-7 gegeneinander versetzt liegenden Kulissenabschnitte der Kulissenführung 17 zu folgen.

Die über das Gelenk 10 mit dem Handhebel 8 drehfest verbundene Stellwelle 9 ist in einem Lagerauge 25 eines fahrzeugfesten Konsolenteiles 27 drehbar gelagert. Schließlich ist mit der Stellwelle 9 noch ein Stellhebel 13 über sein Befestigungsauge 29 fest verbunden, welcher das eine Ende eines Stellgestänges 12 bildet, welches zu einem Wählorgan der Schaltvorrichtung des Gangwechselgetriebes führt.

Das hülsenförmige Aufnahmeteil 16 weist an seinem unteren Ende einen engen zylindrischen Führungsabschnitt 20 als Gleitführung für das untere Ende des Hebelteiles 14, einen sich anschließenden und im Durchmesser etwas erweiterten Mittelabschnitt 31 für die Aufnahme einer Auflagerfeder 30 sowie einen sich anschließenden oberen, im Durchmesser nochmals erweiterten Führungsabschnitt 26 für zwei Lagerringe 24 und 32 auf, wobei die Lagerringe vom Hebelteil 14 beweglich durchsetzt werden.

Der zwischen den Abschnitten 20 und 31 des Aufnahmeteiles 16 gebildete radiale Absatz ist als Widerlager 28 für die Auflagerfeder 30 verwendet, auf der sich der als Auflager für das Hebelteil 14 arbeitende Lagerring 24 abstützt. Der andere Lagerring 32 arbeitet als Niederhalter für das Hebelteil 14 und stützt sich zu diesem Zweck unter der Wirkung der unter Vorspannung gesetzten Auflagerfeder 30 an einem in eine innere Umfangsnut des Führungsabschnittes 26 als ein lösbarer Anschlag eingesetzten Sicherungsring 34 ab.

Der Lagerring 32 greift mit einer als ein erstes Positionierglied 21 verwendeten radialen Nase seines Außenmantels in einen als eine korrespondierende erste Raste 38 verwendeten axialen Schlitz im Führungsabschnitt 26 ein, um den Lagerring 32 in einer bestimmten Drehwinkelstellung gegenüber dem Aufnahmeteil 16 zu fixieren, wobei der Schlitz zu dem die Montageöffnung 56 für das Einbringen der Lagerringe etc. aufweisenden Stirnende 58 des Aufnahmeteiles 16 offen - dagegen in der auf das Widerlager 28 weisenden Richtung der Lagerachse 50-50 geschlossen ist, so daß der Schlitzgrund 44 in dieser Richtung einen Anschlag für den Lagerring 32 bzw. für dessen Positionierglied 21 bildet.

Das Hebelteil 14 arbeitet mit den beiden Lagerringen 24 und 32 mittels zweier zapfenförmiger Lagerteile 22 auf folgende Weise zusammen:
Die fluchtend zu einer gemeinsamen Achse 33-33 und bewegungsfest sowie diametral am Hebelteil 14 angeordneten Lagerteile 22 liegen einerseits auf der dem Lagerring 32 benachbarten Stirnfläche 59 des Lagerringes 24 auf. Andererseits greifen die Lagerteile 22 in je eine zugehörige zweite Raste 40 ein, welche in der dem Lagerring 24 benachbarten Stirnfläche 46 des Lagerringes 32 ausgebildet sind und naturgemäß zur Achse 33-33 in Einbaustellung fluchten. Damit die Federkraft der Auflagerfeder 30 nicht durch den Lagerring 32 eliminiert wird, ist der Durchmesser 52 der Lagerteile 22 jeweils größer als die wirksame Tiefe 54 der zugehörigen Raste 40 gegenüber der Stirnfläche 46, so daß die Federkraft über die Lagerteile 22 auf das Hebelteil 14 wirkt.

Andererseits sind die Lagerteile 22 jeweils als ein zweites Positionierglied verwendet, um den Handgriff 15 unter Vermittlung des Lagerringes 32 gegenüber der Drehachse 7-7 in eine vorbestimmte Einbaustellung für die Wählbetätigung zu bringen, bei welcher der Handgriff 15 Schwenkbewegungen um die Drehachse 7-7 ausführt. Zu diesem Zweck ist am Aufnahmeteil 16 die erste Raste 38 in einer vorbestimmten Lage relativ zu der mit der Gelenkachse 11-11 in Einbaulage übereinstimmenden Achse der Gelenkaugen im Gabelkopf 18 für die Lagerung am Gelenkbolzen 19 angeordnet. Des weiteren ist am Lagerring 32 die Drehwinkelstellung 35 der zweiten Raste 40 gegenüber dem mit der ersten Raste 38 zusammenarbeitenden ersten Positionierglied 21 auf die Lagezuordnung am Hebelteil 14 zwischen dem mit der zweiten Raste 40 zusammenarbeitenden zweiten Positionierglied 22 relativ zum Handgriff 15 so abgestimmt, daß beim Einrasten der Positionierglieder 22 der Handgriff 15 zwangsläufig seine vorbestimmte Einbaustellung einnimmt, wobei naturgemäß das Hebelteil 14 seine durch die Rasten vorgegebene Drehwinkelstellung 36 gegenüber dem Aufnahmeteil 16 aufweist.

Erfindungsgemäß bilden das Aufnahmeteil 16 zusammen mit der Auflagerfeder 30, den Lagerringen 24 und 32 sowie dem Sicherungsring 34 eine vormontierte Baueinheit, welche zunächst ohne Hebelteil 14 und Handgriff 15 in das Konsolenteil 27 eingebaut wird. In einem sich anschließenden Montageschritt wird die Wählkulisse 17 auf das Konsolenteil 27 aufgesetzt, wodurch die besagte Baueinheit quasi überdacht ist.

Für die sich anschließende Montage einer zweiten vormontierten Baueinheit, welche aus dem Hebelteil 14 mit dem Handgriff 15 und den Positioniergliedern 22 besteht, weist der als Niederhalter arbeitende obere Lagerring 32 für das Hindurchführen der Positionierglieder 22 korrespondierende Montageschlitze 42 auf, welche gegenüber den zweiten Rasten 40 um einen Drehwinkel 48 versetzt angeordnet sind.
Auf diese Weise kann das Hebelteil 14 mit seinen Positioniergliedern 22 in das Aufnahmeteil 16 unter Zusammendrücken der Auflagerfeder 30 eingesetzt werden und nach Drehung um den Winkel 48 in seine Einbaustellung einrasten. Die Vorspannung der Auflagerfeder 30 ist so ausgelegt, daß der Lagerring 24 unter den normalen Handkräften der Wählbetätigung starr abgestützt ist.

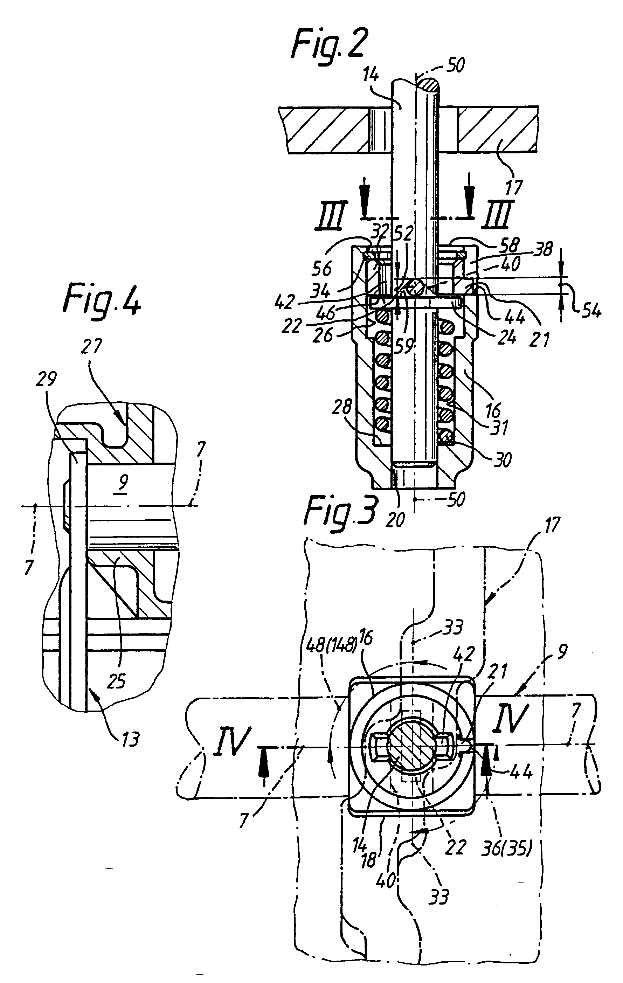

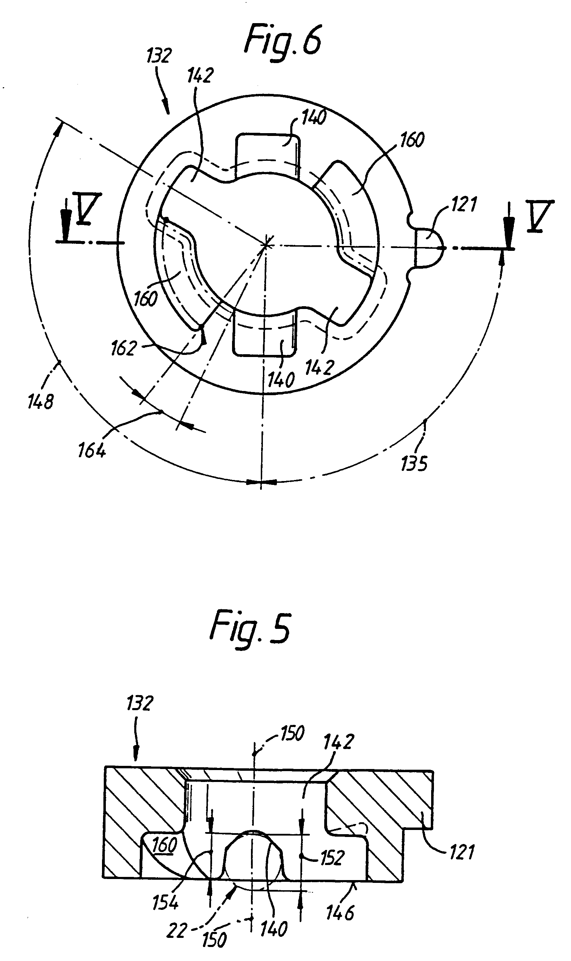

Die Variante 132 in den Figuren 5 und 6 für den als Niederhalter arbeitenden Lagerring 32 der Figuren 2 und 3 sieht eine zusätzliche Neigungsfläche 160 zwischen dem Montageschlitz 142 für das Hindurchführen eines Positioniergliedes 22 und der Raste 140 zur Fixierung dieses Positioniergliedes 22 vor, wobei diese Neigungsfläche 160 in Umfangsrichtung um einen Differenzdrehwinkel 164 vor der zugehörigen Raste 140 bereits in die die Raste 140 aufweisende Stirnfläche 146 des Lagerringes 132 übergeht (Übergang 162). Auf diese Weise ist der Kraftaufwand für das Einsetzen der das Hebelteil 14 enthaltenden zweiten vormontierten Baueinheit in die Einbaustellung (Drehwinkelstellung 36 in Fig. 3) gering gehalten, eine zwangsläufige Zuordnung zwischen Montageschlitz und Raste erreicht sowie ein unbeabsichtigtes Überwechseln des Positioniergliedes 22 aus der Raste 140 in den Bereich der Neigungsfläche 160 vermieden.

Um die Neigungsfläche 160 räumlich unterbringen zu können, ist der Differenzdrehwinkel 148 zwischen Raste 140 und zugehörigem Montageschlitz 142 größer als 90 ° ausgeführt.

Im übrigen sind beide Varianten 32 und 132 des als Niederhalter arbeitenden Lagerringes gleich ausgebildet. So weist auch der Lagerring 132 an seinem Außenmantel eine als erstes Positionierglied 121 in den Schlitz 38 einsetzbare Nase auf, die um einen bestimmten Differenzdrehwinkel 135 (welcher gleich dem Differenzdrehwinkel 35 ist) gegenüber der Achse der Rasten 140 versetzt liegt. Schließlich ist auch beim Lagerring 132 die Anordnung so getroffen, daß die in Richtung der Ringachse 150-150 gemessene wirksame Tiefe 154 der Rasten 140 kleiner ist als der Durchmesser 152 der Positionierglieder 22, so daß auch hier die Federkraft über die Positionierglieder 22 in den Lagerring 132 eingeleitet wird.

## Patentansprüche

1. Vorrichtung zur lösbaren Verbindung eines Handhebels über ein Gelenk mit einem Stellgestänge zum Wählen von Gängen eines Gangwechselgetriebes, mit folgenden Merkmalen:
    - einem zum Handhebel bewegungsfesten stangenförmigen Hebelteil (14),
    - einem hülsenförmigen Aufnahmeteil (16) für das Hebelteil,
    - einer zu der einen Gelenkhälfte bewegungsfesten Gleitführung (20) für das Hebelteil,
    - einem zum Hebelteil bewegungsfesten Lagerteil,
    - einem als Auflager arbeitenden Lagerring für die Abstützung des hebelfesten Lagerteiles,
    - einer Führung zur axialen Verschiebung des als Auflager arbeitenden Lagerringes gegenüber dem Aufnahmeteil,
    - einem zum Aufnahmeteil bewegungsfesten Widerlager,
    - einer Auflagerfeder zwischen dem als Auflager arbeitenden Lagerring und dem Widerlager,
    - einem als Niederhalter für das hebelfeste Lagerteil arbeitenden Lagerring,
    - einem lösbar am Aufnahmeteil gehalterten Anschlag für einen der Lagerringe zum Abfangen der Federkraft,
    und mit einer Positioniervorrichtung zur Festlegung des Hebelteiles in einer bestimmten Drehwinkelstellung gegenüber dem Aufnahmeteil, mit folgenden Merkmalen:
    - einem zu einem der Lagerringe bewegungsfesten ersten Positionierglied (21, 121),
    - einer zum Aufnahmeteil bewegungsfesten ersten Raste für die Fixierung des das erste Positionierglied aufweisenden Lagerringes in der bestimmten Drehwinkelstellung,
    - und mit Anordnung eines zweiten Positioniergliedes (22) und einer korrespondierenden zweiten Raste derart, daß das Hebelteil gegenüber dem das erste Positionierglied aufweisenden Lagerring fixierbar ist, wenn das Hebelteil in die bestimmte Drehwinkelstellung gebracht ist,
gekennzeichnet durch die weiteren Merkmale:
    - die beiden Lagerringe (24 und 32 bzw. 132) sind sowohl relativ zueinander als auch relativ zum Hebelteil (14) beweglich angeordnet,
    - der als Niederhalter arbeitende Lagerring (32 bzw. 132) ist sowohl mit dem ersten Positionierglied (21 bzw. 121) als auch mit einem Montageschlitz (42 bzw. 142) für das Hindurchführen des zweiten Positioniergliedes (22) versehen,
    - der als Niederhalter arbeitende Lagerring (32 bzw. 132) ist durch den lösbaren Anschlag (34) in der einen Richtung und in der auf das Widerlager (28) weisenden entgegengesetzten Richtung der Lagerachse(50-50) durch einen weiteren Anschlag (44) gegenüber dem Aufnahmeteil (16) fixierbar,
    - das zweite Positionierglied (22) ist bewegungsfest zum Hebelteil (14), jedoch beweglich relativ zu beiden Lagerringen (24 und 32 bzw. 132) angeordnet,
    - die zweite Raste (40 bzw. 140) ist an derjenigen Stirnseite (46 bzw. 146) des als Niederhalter arbeitenden Lagerringes (32 bzw. 132) vorgesehen, welche dem anderen Lagerring (24) zugekehrt ist,
    - die zweite Raste (40 bzw. 140) ist gegenüber dem Montageschlitz (42 bzw. 142) um einen Differenzdrehwinkel (48 bzw. 148) versetzt angeordnet,
    - die Gleitführung (20) ist bewegungsfest zum Aufnahmeteil (16) angeordnet, und
    - das Aufnahmeteil (16) ist bewegungsfest zu der mit dem Hebelteil (14) verbundenen Gelenkhälfte (18) angeordnet.

2. Vorrichtung nach Anspruch 1,
    **dadurch gekennzeichnet,**
    daß das zweite Positionierglied (22) als Lagerteil verwendet und somit an der benachbarten Stirnseite (59) des als Auflager arbeitenden Lagerringes (24) in ständige Anlage bringbar ist, wobei in den Richtungen der Lagerachse (50-50) bzw. Ringachse (150-150) die Abmessung (52 bzw. 152) des Positioniergliedes (22) größer als die wirksame Tiefe (54 bzw. 154) der zugehörigen Raste (40 bzw. 140) ausgelegt ist.

3. Vorrichtung nach Anspruch 1 oder 2,
   **dadurch gekennzeichnet,**
   daß die erste Raste (38) als Schlitz ausgebildet ist, welcher zu dem die Montageöffnung (56) für das Einbringen u. a. der Lagerringe (24, 32 bzw. 132) aufweisenden Stirnende (58) des Aufnahmeteiles (16) offen und in der auf das Widerlager (28) weisenden Richtung geschlossen ist, so daß der Schlitzgrund (44) den Anschlag für die Fixierung des als Niederhalter arbeitenden Lagerringes (32 bzw. 132) in der auf das Widerlager (28) weisenden Richtung bildet.

4. Vorrichtung nach einem der Ansprüche 1 bis 3,
   **dadurch gekennzeichnet,**
   daß das erste Positionierglied (21 bzw. 121) als radialer nasenartiger Ansatz am Außenmantel des als Niederhalter arbeitenden Lagerringes (32 bzw. 132) ausgebildet ist.

5. Vorrichtung nach einem der Ansprüche 1 bis 4,
   **dadurch gekennzeichnet,**
   daß der Montageschlitz (142) in der einen Umfangsrichtung durch eine Neigungsfläche (160) in die die zweite Raste (140) aufweisende Stirnfläche (146) übergeht.

6. Vorrichtung nach einem der Ansprüche 1 bis 5,
   **dadurch gekennzeichnet,**
   daß der Übergang (162) zwischen der Neigungsfläche (160) und der Stirnfläche (146) gegenüber der zweiten Raste (140) um einen Differenzdrehwinkel (164) versetzt liegt.

7. Vorrichtung nach einem der Ansprüche 1 bis 6, bei der die andere Gelenkhälfte mit einer Stellwelle bewegungsfest verbunden ist,
   **dadurch gekennzeichnet,**
   daß ein einachsiges Gelenk (10) verwendet ist und die Gelenkachse (11-11) quer zur Drehachse (7-7) der Stellwelle (9) liegt.

8. Vorrichtung nach einem der Ansprüche 1 bis 7,
   **dadurch gekennzeichnet,**
   daß die Stellwelle (9) mit einem Stellhebel (13) bewegungsfest verbunden ist.

**Claims**

1. Device for the releasable connection of a hand lever by means of a joint to a setting linkage for selecting gears of a change-speed gearbox, having the following features:
   - a rod-shaped lever part (14) fixed so that it cannot move relative to the hand lever,
   - a sleeve-shaped acceptance part (16) for the lever part,
   - a sliding guide (20), fixed so that it cannot move relative to one half of the joint for the lever part,
   - a support part fixed so that it cannot move relative to the lever part,
   - a support ring, operating as a support, for supporting the support part fixed relative to the lever,
   - a guide for the axial displacement of the support ring, operating as a support, relative to the acceptance part,
   - an abutment fixed so that it cannot move relative to the acceptance part,
   - a support spring between the support ring operating as a support and the abutment,
   - a support ring operating as a holding-down device for the support part fixed relative to the lever,
   - a releasable stop held on the acceptance part for one of the support rings for accepting the spring force,

   and having a positioning device for fixing the lever part in a defined angular position relative to the acceptance part, having the following features:
   - a first positioning element (21, 121) fixed so that it cannot move relative to one of the support rings,
   - a first catch, fixed so that it cannot move relative to the acceptance part, for fixing the support ring with the first positioning element in the defined angular position,
   - and with arrangement of a second positioning element (22) and a corresponding second catch in such a way that the lever part can be fixed relative to the support ring with the first positioning element whenever the lever part is brought into the defined angular position,

   characterised by the following features:
   - the two support rings (24 and 32 or 132) are arranged to be moveable both relative to one another and relative to the lever part (14),
   - the bearing ring operating as a holding-down device (32 or 132) is provided with both the first positioning element (21 or 121) and an assembly slot (42 or 142) for feeding through the second positioning element (22),
   - the support ring (32 or 132) operating as a holding-down device can be fixed relative to the acceptance part (16) in one direction of the support axis (50-50) by means of the releasable stop (34) and in the opposite direction of the support axis (50-50) pointing towards the abutment (28) by means of a further stop (44),
   - the second positioning element (22) is arranged so that it cannot move relative to the lever part (14) but can be moved relative to the two support rings (24 and 32 or 132),

- the second catch (40 or 140) is provided on that end face (46 or 146) of the support ring (32 or 132) operating as a holding-down device which faces towards the other support ring (24),

- the second catch (40 or 140) is arranged offset relative to the assembly slot (42 or 142) by a rotational difference angle (48 or 148),

- the sliding guide (20) is arranged so that it cannot move relative to the acceptance part (16), and

- the acceptance part (16) is arranged so that it cannot move relative to the half of the joint (18) connected to the lever part (14).

2. Device according to Claim 1, characterised in that the second positioning element (22) is used as a support part and can therefore be brought into continuous contact with the adjacent end face (59) of the support ring (24) operating as a support, the dimension (52 or 152) of the positioning element (22) in the directions of the bearing axis (50-50) or ring axis (150-150) being designed to be greater than the effective depth (54 or 154) of the associated catch (40 or 140).

3. Device according to Claim 1 or 2, characterised in that the first catch (38) is designed as a slot which is open to the end face (58) of the acceptance part (16) having the assembly opening (56) for the insertion, inter alia, of the support rings (24, 32 or 132) and is closed in the direction pointing towards the abutment (28), so that the bottom of the slot (44) forms the stop for fixing the bearing ring (32 or 132) operating as a holding-down device in the direction pointing towards the abutment (28).

4. Device according to one of Claims 1 to 3, characterised in that the first positioning element (21 or 121) is designed as a radial lug-type protrusion on the outer surface of the bearing ring (32 or 132) operating as a holding-down device.

5. Device according to one of Claims 1 to 4, characterised in that the assembly slot (142) merges in the peripheral direction by means of the inclined surface (160) into the end face (146) having the second catch (140).

6. Device according to one of Claims 1 to 5, characterised in that the transition (162) between the inclined surface (160) and the end face (146) is offset relative to the second catch (140) by a rotational difference angle (164).

7. Device according to one of Claims 1 to 6, in which the other half of the joint is connected so that it cannot move relative to a setting shaft, characterised in that a single-axis joint (10) is used and the joint axis (11-11) is located transverse to the rotational axis (7-7) of the setting shaft (9).

8. Device according to one of Claims 1 to 7, characterised in that the setting shaft (9) is connected so that it cannot move relative to a setting lever (13).

**Revendications**

1. Dispositif pour relier de façon séparable un levier manuel, par l'intermédiaire d'une articulation, avec une tige de manoeuvre pour sélection de vitesses d'une boîte de vitesses, comportant les composants suivants :
   - une partie-levier (14) en forme de tige, non déplaçable par rapport au levier manuel,
   - une partie réceptrice (16) en forme de fourreau pour la partie-levier,
   - un guide à glissement (20) pour la partie-levier, non déplaçable par rapport à une moitié de l'articulation,
   - une partie d'appui non déplaçable par rapport à la partie-levier,
   - une bague d'appui, opérant comme un palier, pour soutenir la partie d'appui solidaire du levier,
   - un guide pour une translation axiale de la bague d'appui opérant comme un palier, par rapport à la partie réceptrice,
   - un contre-appui non déplaçable par rapport à la partie réceptrice,
   - un ressort d'appui disposé entre la bague d'appui opérant comme un palier et le contre-appui,
   - une bague d'appui opérant comme un support pour la partie d'appui solidaire du levier,
   - une butée pour une des bagues d'appui, maintenue de façon séparable sur la partie réceptrice et servant à absorber la force du ressort,

ainsi qu'un mécanisme de positionnement pour fixer la partie-levier dans une position angulaire déterminée par rapport à la partie réceptrice, ce mécanisme comportant les composants suivants :
   - un premier moyen de positionnement (21, 121) non déplaçable par rapport à une des bagues d'appui,
   - un premier moyen d'arrêt, non déplaçable par rapport à la partie réceptrice, pour la fixation de la bague d'appui, comportant le premier moyen de positionnement, dans la position angulaire déterminée,
   - et un second moyen de positionnement (22) qui est disposé par rapport à un second moyen d'arrêt correspondant de telle sorte que la partie-levier puisse être fixée par rapport à la bague d'appui comportant le premier moyen de positionnement, lorsque la partie-levier a été amenée dans la position angulaire déterminée,

dispositif caractérisé par les autres particularités suivantes :

- les deux bagues d'appui (24 et 32 ou 132 ) sont disposées de façon à être déplaçables aussi bien l'une par rapport à l'autre que par rapport à la partie-levier (14),
- la bague d'appui (32 ou 132) opérant comme un support est pourvue d'une part du premier moyen de positionnement (21 ou 121) et d'autre part d'une fente de montage (42 ou 142) pour le passage guidé du second moyen de positionnement (22),
- la bague d'appui (32 ou 132) opérant comme un support peut être fixée par rapport à la partie réceptrice (16) dans un sens de l'axe de palier (50-50) au moyen de la butée séparable (34) et dans le sens opposé de cet axe, orienté vers le contre-appui (28), au moyen d'une autre butée (44),
- le second moyen de positionnement (22) est disposé sans possibilité de déplacement par rapport à la partie-levier (14) mais cependant avec possibilité de déplacement par rapport aux deux bagues d'appui (24 et 32 ou 132),
- le second moyen d'arrêt (40 ou 140) est prévu sur le côté frontal (46 ou 146) de la bague d'appui (32 ou 132) opérant comme un support, qui est dirigé vers l'autre bague d'appui (24),
- le second moyen d'arrêt (40 ou 140) est disposé en étant décalé d'un angle de rotation différentielle (48 ou 148) par rapport à la fente de montage (42 ou 142 ),
- le guide à glissement (20) est disposé sans possibilité de déplacement par rapport à la partie réceptrice (16), et
- la partie réceptrice (16) est disposée sans possibilité de déplacement par rapport à la moitié d'articulation reliée à la partie-levier (14).

2. Dispositif selon la revendication 1, caractérisé en ce que le second moyen de positionnement (22) est utilisé comme une partie d'appui et peut ainsi être amené en application constante contre le côté frontal adjacent (59) de la bague d'appui (24) opérant comme un palier et à cet égard, dans les sens de l'axe de palier (50-50) ou de l'axe de bague (150-150), la dimension (52 ou 152) du moyen de positionnement (22) est plus grande que la profondeur utile (54 ou 154) du moyen d'arrêt associé (40 ou 140).

3. Dispositif selon la revendication 1 ou 2, caractérisé en ce que le premier moyen d'arrêt (38) est agencé sous forme d'une fente, qui est ouverte en direction de l'extrémité frontale (58) de la partie réceptrice (16) qui comporte le trou de montage (56) permettant la mise en place, entre autres, des bagues d'appui (24, 32 ou 132), et qui est fermée dans le sens orienté vers le contre-appui (28), de telle sorte que la base (44) de la fente constitue la butée servant à la fixation de la bague d'appui (32 ou 132), opérant comme un support, dans le sens orienté vers le contre-appui (28).

4. Dispositif selon une des revendications 1 à 3, caractérisé en ce que le premier moyen de positionnement (21 ou 121) est agencé comme un appendice radial en forme de nez situé sur la surface extérieure de la bague d'appui (32 ou 132) opérant comme un support.

5. Dispositif selon une des revendications 1 à 4, caractérisé en ce que la fente de montage (142) rejoint, dans une direction circonférentielle, au moyen d'une surface inclinée (160), la surface frontale (146) comportant le second moyen d'arrêt (140).

6. Dispositif selon une des revendications 1 à 5, caractérisé en ce que la zone de transition (162) entre la surface inclinée (160) et la surface frontale (146) est décalée d'un angle de rotation différentielle (164) par rapport au second moyen d'arrêt (140).

7. Dispositif selon une des revendications 1 à 6, dans lequel l'autre moitié d'articulation est reliée à un arbre de manoeuvre sans possibilité de déplacement relatif, caractérisé en ce qu'une articulation à un seul axe (10) est utilisée et l'axe d'articulation (11-11 est orienté perpendiculairement à l'axe de rotation (7-7) de l'arbre de manoeuvre (9).

8. Dispositif selon une des revendications 1 à 7, caractérisé en ce que l'arbre de manoeuvre (9) est relié à un levier de manoeuvre (13) sans possibilité de rotation relative.

Fig.1

*Fig.2*

*Fig.4*

*Fig.3*

## Fig. 6

## Fig. 5